# EUROPEAN PATENT APPLICATION

(11) **EP 1 897 851 A1**
(43) Date of publication of application: **12.03.2008**
(21) Application number: 06120334.5
(22) Date of filing: 08.09.2006
(51) Int. Cl.: C01B 3/38, C12P 7/20

(54) **Process for the preparation of synthesis gas**

(71) Applicant: Gelato Corporation N.V., Curacao (AN)
(72) Inventor: Doorn, Siebolt, NL-9909 BZ Spijk (NL)
(74) Representative: Oberlein, Gerriet H. R.

(57) **Abstract**

Process for the production of synthesis gas which involves the steps of (a) preparing a vapour phase mixture comprising steam and at least one hydrocarbon or oxygenated hydrocarbon with an atmospheric boiling point in the range of -50 to 370°C, said vapour phase mixture having a C/H₂O molar ratio at least 2, and (b) catalytically converting the vapour phase mixture into synthesis gas.

## Description

The present invention relates to the production of synthesis gas from an (oxygenated) hydrocarbon with an atmospheric boiling point in the range of -50 to 370°C. The invention also relates to a process for the production of methanol from the so-produced synthesis gas and to a process for preparing a vapour phase mixture of steam and (oxygenated) hydrocarbon that can be used to produce the synthesis gas.

The production of biodiesel is steadily increasing. Biodiesel is generally made from vegetable and animal oils and fats, such as rape seed oil, sunflower oil, palm oil (kernel and pit), coconut oil, soybean oil, corn, cooking oil, trap grease, and (in)edible tallow. With biodiesel production, large amounts of glycerol are formed. It is therefore important to find useful applications for glycerol. One such application is its use as feedstock for the production of synthesis gas.

One of the methods presently employed for the production of synthesis gas is steam reforming of natural gas (methane). This method involves purification of the gas by hydrodesulfurization, mixing the purified gas with steam, heating the resulting mixture in a convection section, and leading the resulting mixture over a catalyst bed to produce synthesis gas.
One of the chemicals that can be produced from synthesis gas is methanol. In a methanol production plant, synthesis gas is produced, the produced gas is compressed, and then passed through a converter in order to convert it to methanol.

The use of glycerol for the production of synthesis gas is known from the prior art (see: T. Valliyappan, "Hydrogen or Syn Gas Production from Glycerol Using Pyrolysis and Steam Gasification Processes", Thesis, University of Saskatchewan, December 2004). In the known processes, liquid glycerol droplets - in a stream of inert gas or steam - are introduced into a catalyst bed.

Unfortunately, this leads to significant carbon deposition on the catalyst, resulting in catalyst deactivation.

The object of the present invention is to provide a process for the production of synthesis gas from (oxygenated) hydrocarbons, such as glycerol, wherein carbon deposition on the catalyst is diminished.

The process according to the invention involves the steps of:
a) preparing a vapour phase mixture comprising steam and at least one hydrocarbon or oxygenated hydrocarbon with an atmospheric boiling point in the range of -50 to 370°C, said vapour phase mixture having a C/H₂O molar ratio at least 2, and
b) catalytically converting the vapour phase mixture into synthesis gas.

So, in the process of the present invention, the (oxygenated) hydrocarbon, e.g. glycerol, is not introduced into the catalyst bed as a liquid. Instead, it is fed to the catalyst bed as a vapour, together with the necessary amount of steam. It has surprisingly been found that this results in diminished carbon deposition on the catalyst.

The vapour phase mixture comprises steam and at least one hydrocarbon or oxygenated hydrocarbon. This hydrocarbon or oxygenated hydrocarbon should have an atmospheric boiling point (i.e. the boiling point at atmospheric pressure) in the range of -50 to 370°C, more preferably 0 to 370°C, even more preferably 30 to 370°C, and most preferably 50 to 370°C.
Examples of suitable hydrocarbons are alkanes with a boiling point within the mentioned range. Preferred alkanes are alkanes with 3 to 7 carbon atoms, such as propane, butane, pentane, hexane, and heptane.
Examples of suitable oxygenated hydrocarbons are alcohols, including monoalcohols, diols, and triols, such as ethanol, propanol, iso-propanol, glycerol, and glycols.

Preferably, an oxygenated hydrocarbon is used. More preferably, the oxygenated hydrocarbon is glycerol.

The C/H₂O molar ratio in said vapour phase mixture should be at least 2, preferably at least 2.5. The C/H₂O molar ratio preferably is not higher than 5, more preferably not higher than 4, and most preferably not higher than 3.2.

The vapour phase mixture can be prepared by contacting steam with the (oxygenated) hydrocarbon in a gas-liquid contacting device, such as a distillation column or a scrubber.
A suitable distillation column requires only a few plates. At the top of the column, concentrated (oxygenated) hydrocarbon is introduced. At the bottom, steam is introduced. The vapour phase mixture leaves the distillation column at the top.
The C/H₂O molar ratio of the resulting vapour phase mixture will depend on (i) the temperature and pressure of the steam that is introduced into the gas-liquid contacting device and (ii) the distillation equilibrium between steam and the (oxygenated) hydrocarbon at that temperature and pressure. In other words, the desired temperature and pressure of the steam will depend on the type of (oxygenated) hydrocarbon used and should be chosen such that - given the distillation equilibrium - a C/H₂O molar ratio of at least 2 is obtained.
When glycerol is used as the oxygenated hydrocarbon, the steam preferably has a pressure of 10-30 bar, more preferably 15-25 bar, and most preferably about 20 bar. The temperature of the steam preferably is 270-380°C, more preferably 310-360 °C, and most preferably about 340 °C.
At the bottom of the distillation column, a liquid water/(oxygenated) hydrocarbon mixture can be removed. The (oxygenated) hydrocarbon can be isolated from this mixture - for instance by flashing at reduced pressure - and recycled to the top of the distillation column.

The vapour phase mixture is catalytically converted into synthesis gas. Preferably, this is done by feeding the vapour phase mixture to the convection section of a steam reformer. In this convection section, the vapour phase mixture can be mixed with natural gas and additional steam. This makes the process very flexible, since it allows the use of both natural gas and glycerol, depending on their availability. Furthermore, it allows coupling of the vapour phase mixture preparation unit (i.e. the gas-liquid contacting device) to the convection section of an existing steam reformer.
The vapour phase mixture can be mixed with natural gas and steam in any ratio, as long as the resulting mixture of (oxygenated) hydrocarbon, steam, and natural gas has a C/H₂O molar ratio of least 2.
Preferably, the mixture leaving the convection section is composed of 10-100 vol% of the vapour phase mixture. More preferably, the mixture leaving the convection section contains methane and glycerol in a molar ratio methane:glycerol in the range 1:1 to 3:1, more preferably about 2:1.

The mixture leaving the convection section proceeds through the steam reformer in conventional ways and synthesis gas is produced in a conventional steam reforming catalyst bed. Examples of steam reforming catalysts are supported Ni, Co, Pt, Pd, Ir, Rh, and Ru catalysts. Considering the cost per unit of activity, nickel catalysts are generally preferred. Such nickel catalysts are normally added to the reformer in the nickel oxide form and reduced to the metallic state immediately before use. Different carrier materials can be used to support the metal, such as alumina, magnesia, silica, calcium aluminate, or combinations thereof. The catalyst may be in the form of, e.g., pellets, wheels, lumps, or rings. The catalyst can be present in a fixed bed or a fluid bed or supported on a ceramic monolyth.
The catalyst bed generally operates at a temperature in the range of 300 to 1,050 °C, more preferably 300 to 950 °C, and most preferably 350 to 850 °C.

The synthesis gas produced can be used to synthesize various chemicals, such as methanol, acetic acid, methyl formate, ethanol, propanol, isobutanol, ethylene glycol, dimethyl ether, and n-butanol.

In particular, the present invention also relates to a process for the production of methanol which involves the steps of (i) preparing synthesis gas according to the present invention, followed by (ii) converting the synthesis gas to methanol. According to this process, synthesis gas is produced as described above and the produced gas is then compressed and converted to methanol using conventional techniques.

## Claims

1. Process for the production of synthesis gas which involves the steps of:
a) preparing a vapour phase mixture comprising steam and at least one hydrocarbon or oxygenated hydrocarbon with an atmospheric boiling point in the range of -50 to 370°C, said vapour phase mixture having a C/H₂O molar ratio at least 2, and
b) catalytically converting the vapour phase mixture into synthesis gas.

2. Process according to claim 1 wherein an oxygenated hydrocarbon is used.

3. Process according to claim 2 wherein the oxygenated hydrocarbon is glycerol.

4. Process according to any one of the preceding claims wherein the C/H₂O molar ratio of the vapour phase mixture ranges from 2.5 to 4.

5. Process according to any one of the preceding claims wherein the vapour phase mixture is mixed with natural gas prior to its catalytic conversion to synthesis gas.

6. Process according to any one of the preceding claims wherein the vapour phase mixture is prepared in a distillation column by feeding the (oxygenated) hydrocarbon at the top and steam at the bottom of the column.

7. Process for the production of methanol which involves the steps of (i) preparing synthesis gas according to any one of the preceding claims, followed by (ii) converting the synthesis gas to methanol.

8. Process for the production of a vapour phase mixture with a C/H₂O molar ratio of at least 2 which comprises steam and at least one hydrocarbon or oxygenated hydrocarbon with an atmospheric boiling point in the range of -50 to 370°C, wherein steam is introduced at the bottom of a distillation column and (oxygenated) hydrocarbon is introduced at the top of said distillation column.

9. Process according to claim 8 wherein the oxygenated hydrocarbon is glycerol and the steam introduced into the distillation column has a pressure of 10-30 bar and a temperature of 270-380°C.

10. Process according to claim 8 or 9 wherein the C/H₂O molar ratio of the vapour phase mixture ranges from 2.5 to 4.
